# EUROPÄISCHE PATENTSCHRIFT

(11) **EP 1 414 743 B1**
(45) Veröffentlichungstag und Bekanntmachung des Hinweises auf die Patenterteilung: **29.12.2004**
(21) Anmeldenummer: 02758347.5
(22) Anmeldetag: 16.07.2002
(51) Int. Cl.: C01B 21/14, B01D 61/14

(54) **VERFAHREN ZUR FILTRATION EINES WÄSSRIGEN, BEI DER HERSTELLUNG VON HYDROXYLAMIN ANFALLENDEN REAKTIONSGEMISCHS**
METHOD FOR THE FILTRATION OF AN AQUEOUS REACTION MIXTURE ARISING IN THE PRODUCTION OF HYDROXYLAMINE
PROCEDE POUR FILTRER UN MELANGE REACTIONNEL AQUEUX PRODUIT LORS DE LA PREPARATION D'HYDROXYLAMINE

(30) Priorität: 27.07.2001 DE 10136476
(43) Veröffentlichungstag der Anmeldung: 06.05.2004
(73) Patentinhaber: BASF AKTIENGESELLSCHAFT, 67056 Ludwigshafen (DE)
(72) Erfinder: BITTERLICH, Stefan, 67246 Dirmstein (DE); VOSS, Hartwig, 67227 Frankenthal (DE); WILFINGER, Hans Jörg, 67105 Schifferstadt (DE)
(86) Internationale Anmeldenummer: PCT/EP2002/007890
(87) Internationale Veröffentlichungsnummer: WO 2003/011753

(56) Entgegenhaltungen:
- EP-A- 0 577 213
- WO-A-01/07362
- DE-A- 2 804 225

## Beschreibung

Die vorliegende Erfindung betrifft ein Verfahren zur Auftrennung eines wäßrigen, bei der Herstellung von Hydroxylamin mit Hilfe eines Katalysators anfallenden Reaktionsgemisches, welches unter anderem feste Katalysatorteilchen enthält, in einen an Katalysator angereicherten und einen an Katalysator abgereicherten Teilstrom durch Ultrafiltration an einer anorganischen Membran, dadurch gekennzeichnet, daß der mittlere Porendurchmesser der anorganischen Membran kleiner als 10 nm ist.

Hydroxylamin und dessen Salze, wie Phosphate oder Sulfate, finden bekanntermaßen Anwendung bei der Herstellung von Oximen aus Ketonen oder Aldehyden, insbesondere bei der Herstellung von Cyclohexanonoxim aus Cyclohexanon. Aus Cyclohexanonoxim kann durch Beckmann-Umlagerung Caprolactam erhalten werden, das eine wichtige Ausgangsverbindung zur Herstellung technisch bedeutsamer Polyamide darstellt.

Die Herstellung von Hydroxylamin oder dessen Salze erfolgt üblicherweise durch Hydrierung von Stickstoffmonoxid in wäßriger, saurer Lösung in Gegenwart eines in der Lösung suspendierten, metallhaltigen Katalysators. Nach der Reaktion muß der Katalysator von der das Produkt enthaltenden Lösung abgetrennt werden. Dies kann beispielsweise durch Sedimentation, Filtration oder mit Hilfe von Separatoren erreicht werden. Die Abtrennung des Katalysators sollte dabei vollständig sein und unter möglichst geringem Zeitaufwand ausgeführt werden können. Dabei stellt die Verblokkung der Filter ein Problem dar. Zwar ist der Aufbau eines Filterkuchens bis zu einer gewissen Stärke durchaus erwünscht, da dies zu einer Verbesserung der Filterwirkung führen kann, jedoch bewirkt eine Verstopfung der Filterporen eine Reduktion des Fluxes und damit eine Verlängerung der für die Filtration benötigten Zeit. Um die Aktivität des Katalysators zu erhalten und diesen unmittelbar nach der Abtrennung wieder einer frischen Reaktionslösung zuführen zu können, sollte der Katalysator bei der Abtrennung nur geringen mechanische Belastungen ausgesetzt werden, um seine Oberflächenstruktur nicht negativ zu beeinflussen.

In der EP 0 052 719 B1 wird ein Verfahren zur Abtrennung von Metallkatalysatoren aus Reaktionsmischungen durch Querstromfiltration an Membranvorrichtungen vorgeschlagen. Dabei werden übliche Mikrofiltrationsmembranen, beispielsweise aus Polyethylen, Polypropylen oder Polyamid, verwendet. Das Verfahren eignet sich besonders zur Abtrennung gelartiger Nickelhydroxidschlämme, die z.T. als Katalysatoren bei der Oxidation von Diacetonsorbose großtechnisch eingesetzt werden. Die Membran wird zur Erhaltung der Permeatleistung in regelmäßigen Abständen, z.B. 2 Minuten, kurzzeitig rückgespült. Das Verfahren wird auch zur Abtrennung feinteiliger Palladium-Katalysatoren vorgeschlagen, beispielsweise eines Palladium-Katalysators oder eines Palladium/Kohle-Katalysators. In den Beispielen nimmt der Flux jedoch entweder während der Filtration ab oder es wird zur Beseitigung dieses Problems mit einer hohen Frequenz rückgespült.

Aus WO 01/07362 ist ein Verfahren zur Abtrennung eines suspendierten Hydrierkatalysators aus einer bei der Herstellung von Hydroxylamin durch katalytische Hydrierung von Stickstoffmonoxid anfallenden Reaktionsmischung durch Querstromfiltration an einer Membran aus Polyethylen, Polypropylen, Polyamid, Polytetrafluorethylen, Polyvinylidenfluorid, Polysulfon oder einem Copolymer davon bekannt.

Gemäß EP 0 666 241 A1 kann die Abtrennung des Katalysators aus solchen Reaktionsmischungen durch Filtration beispielsweise mittels eines Kerzenfilters bei Drücken von 200 bis 20000 mbar erfolgen. Es wird dabei ein Filtrat erhalten, das in üblicher Weise aufgearbeitet wird, sowie ein Filterrückstand mit einem Gehalt an 6 bis 16 Gew.-% Hydrierkatalysator und 84 bis 94 Gew.-% einer Lösung, die im wesentlichen ein Hydroxylammoniumsalz enthält. Der Filterrückstand wird durch Sedimentation weiter aufgearbeitet. Die überstehende Lösung wird nach der Sedimentation abgetrennt. Sie enthält noch Hydrierkatalysator, üblicherweise in einer Konzentration im Bereich von 0 bis 5, vorzugsweise 1 bis 4 g/l.

In der DE-OS-26 29 668 wird der Katalysator aus der Reaktionsmischung mittels eines aus Metall und/oder Kunststoff hergestellten Filters ausgeschieden. Zur Verringerung des Filterwiderstands wird vorgeschlagen, Silikat und/oder Siliziumdioxid dadurch aus dem Filter zu entfernen, daß man das Filter einer Behandlung mit einer wäßrigen Lösung von Silicofluorwasserstoffsäure mit einem pH-Wert im Bereich von 1,5 bis 4,5 unterzieht.

In der DE-OS-25 41 462 wird ein verfahren zum Abscheiden von Katalysatorteilchen aus solchen Reaktionsmischungen unter Anwendung bekannter Abscheidungsverfahren vorgeschlagen. Dazu wird der Suspension ein polymeres Flockungsmittel beigegeben.

Aus GB 1134963 ist ein Verfahren zur Abtrennung des Katalysators aus der genannten Reaktionsmischung mit einem Filtermedium mit einer mittleren Porengröße von 90 µm bekannt. Diese Verfahren ist für die gegenwärtig technisch relevanten Verfahren nicht anwendbar, da in diesen Katalysatoren mit einer mittleren Partikelgröße von weniger als 25 µm eingesetzt werden bei höheren Konzentrationen als in GB 1134963 beschrieben.

Ein weiteres Verfahren zur Abtrennung des Katalysators aus solchen Reaktionsmischungen wird in EP 0 577 213 B1 vorgeschlagen. Dazu wird die Hydroxylammoniumsalz-Lösung durch Filtration aus dem genannten Reaktionsgemisch, das unter anderem feste Katalysatorteilchen enthält, mit Hilfe des Querstrom-Filtrationsverfahren abgetrennt. Dabei wird ein anorganisches mikroporöses Filtermedium mit einem Porendurchmesser von 0,01 - 10 µm verwendet und die Katalysatorteilchen weisen eine mittlere Größe von 0,1 - 25 µm auf. Bei einem Transmembrandruck von 2,3 bar und einer Überströmungsgeschwindigkeit von 3 m/s wird ein Flux von 0,9 bis 0,95 m³/m²*h angegeben. Bei einem Katalysatorgehalt von 2,6 Gew.-% in der Reaktionsmischung wird das Filter alle 15 Minuten mit reinem Filtrat rückgespült.

Der vorliegenden Erfindung lag die Aufgabe zugrunde, ein Verfahren zur Filtration eines wäßrigen, bei der Herstellung von Hydroxylamin oder dessen Salzen durch katalytische Hydrierung von Stickoxid anfallenden Reaktionsgemischs, welches unter anderem feste Katalysatorteilchen enthält, durch Querstromfiltration an einer Membran zur Verfügung zu stellen, bei dem unter den gleichen oder weniger aufwendigen Bedingungen als in der EP 0 577 213 B1 eine höhere Produktionskapazität und eine Vergleichmäßigung der Reaktionsbedingungen erreicht wird, wobei insbesondere ein stabiler Betrieb bei einer möglichst hohen Feststoffkonzentration von Bedeutung war.

Demgemäß wurde das eingangs definierte Verfahren gefunden. Das zu filtrierende Reaktionsgemisch wird bei der Herstellung von Hydroxylamin oder dessen Salzen nach bekannten Verfahren erhalten, wie sie z.B. in der DE-A- 40 22 851 oder der EP 0 666 241 A1 beschrieben sind. Dabei wird Stickstoffmonoxid mit Wasserstoff in verdünnter wäßriger Säure, wie Schwefelsäure, Salpetersäure oder Phosphorsäure, in Gegenwart von suspendierten Edelmetallkatalysatoren, wie Platin-Katalysatoren, Palladium-Katalysatoren oder Platin-Palladium-Katalysatoren, vorzugsweise als Trägerkatalysator bei einer Temperatur im Bereich von 30 bis 80°C, und einem Druck im Bereich von 1 bis 30 bar umgesetzt. Als Trägermaterial für den Katalysator ist Kohlenstoff, insbesondere Graphit bevorzugt. Das Trägermaterial weist vorzugsweise eine mittlere Partikelgröße im Bereich von 0,1 bis 10 µm auf (bestimmt als d₅₀-Wert mittels Malvern-Laserbeugung). Das dabei anfallende Reaktionsgemisch enthält im wesentlichen das Salz des Hydroxylamins mit der verwendeten Säure (wie Schwefelsäure, Salpetersäure, Phosphorsäure), insbesondere Hydroxylammoniumsulfat, das entsprechende Ammoniumsalz und den Hydrierkatalysator sowie die verwendete Säure. Die Salze befinden sich in Lösung, während der Katalysator suspendiert vorliegt. Das Reaktionsgemisch enthält im allgemeinen 50 bis 140 g/l, vorzugsweise 110 bis 130 g/l Hydroxylammoniumsalz (berechnet als Hydroxylamin), 3 bis 80 g/l, vorzugsweise 15 bis 25 g/l Ammoniumsalz, 3 bis 100 g/l, vorzugsweise 10 bis 20 g/l der verwendeten Säure und 3 bis 50 Gew.-%, vorzugsweise 5 bis 40 Gew.-% Katalysator (jeweils bezogen auf das Reaktionsgemisch). Die Filtration erfolgt im allgemeinen bei einer Temperatur im Bereich von 20 bis 100°C, vorzugsweise 30 bis 60°C. Bei der Filtration wird das Reaktionsgemisch aufgetrennt in ein Katalysator enthaltendes Retentat und ein Permeat, das die Hauptmenge der Salze und weniger Katalysator als das Reaktionsgemisch, vorzugsweise keinen Katalysator, enthält. Sie wird vorteilhaft so durchgeführt, daß die Menge an Katalysator im Retentat im Bereich von 100 bis 500 g/l Retentat liegt. Aus dem Retentat kann der Katalysator dann in üblicher Weise entfernt werden, z.B. durch Sedimentation wie in der EP 0 666 241 Albeschrieben. Die dabei erhaltene Katalysatorsuspension kann erneut verwendet werden. Der Überstand kann mit dem Permeat weiterverarbeitet oder wieder in die Filtration zurückgeführt werden.

Die Filtration kann kontinuierlich oder diskontinuierlich durchgeführt werden.

Die erfindungsgemäß eingesetzte anorganische Membran bestehen vorteilhaft aus einem mikroporösen Material, das gegenüber dem Reaktionsgemisch inert ist. Beispiele solcher Materialien sind Kohlenstoff, Sintermetall, keramische Materialien, wie TiO₂ oder ZrO₂, vorzugsweise keramische Materialien.

Die eingesetzte Membran kann aus einem im wesentlichen einheitlichen oder auch verschiedenen Materialien bestehen. Besonders vorteilhaft ist ein Aufbau aus einer grobporösen Trägerschicht bzw. mehreren dieser Schichten, auf die die eigentliche Membran mit der erfindungsgemäßen Porengröße aufgebracht ist.

Erfindungsgemäß ist der mittlere Porendurchmesser der anorganischen Membran kleiner als 10 nm, vorzugsweise kleiner als 8 nm, insbesondere kleiner als 6 nm. Vorteilhaft sollte der mittlere Porendurchmesser größer als 0,5 nm, insbesondere größer als 1 nm sein. Die angegebenen Porengrößen sind dabei im Sinne der vorliegenden Erfindung bestimmt durch das MWCO-Verfahren (Molecular Weight Cut Off-Verfahren) gemäß der Firmenschrift "The Filtration Spectrum", Osmotics Inc., U.S.A., 1990. Bei diesem Verfahren wird die Porengröße mittels einer wäßrigen Dextran-Lösung bestimmt, wobei über das Molekulargewicht der zurückgehaltenen und durchgelassenen Moleküle auf die Molekülgröße der gerade noch durch die Membran gehenden Moleküle und damit auf die Porengröße umgerechnet wird.

Als vorteilhaft kommen mittlere Strömungsgeschwindigkeiten über der Membran im Bereich von 1 bis 7, vorzugsweise 3 bis 5 m/s in Betracht. Die Filtration kann jedoch auch bei höheren Strömungsgeschwindigkeiten durchgeführt werden. Falls erforderlich kann die Membran in, vorzugsweise regelmäßigen, Intervallen rückgespült werden, insbesondere mit Permeat.

Die Filtration kann mit Membranen in Filterpressenbauweise erfolgen. Die erfindungsgemäß eingesetzte anorganische Membran kann aus einer oder mehreren Schichten bestehen. Vorteilhaft kann die Membran eine Trägerschicht und eine Filterschicht enthalten. In diesem Fall bezieht sich der erfindungsgemäße mittlere Porendurchmesser auf die Filterschicht. Bevorzugt verwendet man Membranen in Form von Hohlfasern oder. Rohren. Als vorteilhaft hat sich nach bisherigen Beobachtungen eine Membran mit rohrförmigem Querschnitt erwiesen, wobei der Innendurchmesser vorteilhaft mindestens 2 mm, insbesondere 5 bis 20 mm betragen sollte.

In einer bevorzugten Ausführungsform können die rohrförmigen Membrankanäle Bestandteil von Multikanalelementen sein, die jeweils 7 oder 19 Kanäle enthalten.

In einer bevorzugten Ausführungsform kann sich die Membran an der Innenwand von rohrförmigen Kanälen befinden.

Im allgemeinen ist eine Vielzahl davon zu einem Modul zusammengefaßt, so daß eine große Membranfläche auf engem Raum zur Verfügung steht. Zwischen Retentat- und Permeatseite besteht eine Druckdifferenz von im allgemeinen 0,5 bis 10 bar.

## Patentansprüche

1. Verfahren zur Auftrennung eines wäßrigen, bei der Herstellung von Hydroxylamin mit Hilfe eines Katalysators anfallenden Reaktionsgemisches, welches unter anderem feste Katalysatorteilchen enthält, in einen an Katalysator angereicherten und einen an Katalysator abgereicherten Teilstrom durch Ultrafiltration an einer anorganischen Membran, **dadurch gekennzeichnet, daß** der mittlere Porendurchmesser der anorganischen Membran kleiner als 10 nm ist.

2. verfahren nach Anspruch 1, wobei man als Katalysator einen Trägerkatalysator einsetzt.

3. Verfahren nach Anspruch 2, wobei der Trägerkatalysator eine mittlere Partikelgröße im Bereich von 0,1 bis 10 µm aufweist.

4. Verfahren nach den Ansprüchen 1 bis 3, wobei die Membran vom Reaktionsgemisch mit einer Geschwindigkeit von 1 bis 7 m/s überströmt wird.

5. Verfahren nach den Ansprüchen 1 bis 4, wobei der Feststoffgehalt des der Membran zugeführten Reaktionsgemisches im Bereich von 3 bis 50 Gew.-% beträgt.

6. Verfahren nach den Ansprüchen 1 bis 5, wobei die Membran mit Permeat zurückgespült wird.

7. Verfahren nach den Ansprüchen 1 bis 6, wobei das Retentat über die Membran im Kreis geführt wird.

8. Verfahren nach den Ansprüchen 1 bis 7, wobei die Membran sich an der Innenwand von rohrförmigen Kanälen befindet.

9. Verfahren nach Anspruch 8, wobei der Innendurchmesser des rohrförmigen Querschnitts mindestens 5 mm beträgt.

## Claims

1. A process for separating an aqueous reaction mixture which is formed in the preparation of hydroxylamine with the aid of a catalyst and which contains, inter alia, solid catalyst particles into a catalyst-enriched sub-stream and a catalyst-depleted sub-stream by ultrafiltration on an inorganic membrane, wherein the mean pore diameter of the inorganic membrane is less than 10 nm.

2. A process as claimed in claim 1, where the catalyst employed is a supported catalyst.

3. A process as claimed in claim 2, where the supported catalyst has a mean particle size in the range from 0.1 to 10 µm.

4. A process as claimed in any one of claims 1 to 3, where the reaction mixture flows over the membrane at a velocity of from 1 to 7 m/s.

5. A process as claimed in any one of claims 1 to 4, where the solids content of the reaction mixture fed to the membrane is in the range from 3 to 50% by weight.

6. A process as claimed in any one of claims 1 to 5, where the membrane is back-rinsed with permeate.

7. A process as claimed in any one of claims 1 to 6, where the retentate is circulated through the membrane.

8. A process as claimed in any one of claims 1 to 7, where the membrane is located on the inside wall of tubular channels.

9. A process as claimed in claim 8, where the internal diameter of the tubular cross section is at least 5 mm.

## Revendications

1. Procédé de séparation d'un mélange réactionnel aqueux, produit lors de la préparation d'hydroxylamine à l'aide d'un catalyseur, et contenant entre autres des particules solides de catalyseur, en un courant partiel enrichi en catalyseur et un courant partiel appauvri en catalyseur, par ultrafiltration sur une membrane inorganique, **caractérisé en ce que** le diamètre moyen de pores de la membrane inorganique est inférieur à 10 nm.

2. Procédé selon la revendication 1, dans lequel on met en oeuvre comme catalyseur un catalyseur sur support.

3. Procédé selon la revendication 2, dans lequel le catalyseur sur support présente une taille moyenne de particules de l'ordre de 0,1 à 10 µm.

4. Procédé selon les revendications 1 à 3, dans lequel la membrane est irriguée par le mélange réactionnel à une vitesse de 1 à 7 m/s.

5. Procédé selon les revendications 1 à 4, dans lequel la teneur en solides du mélange réactionnel amené à la membrane est de l'ordre de 3 à 50% en poids.

6. Procédé selon les revendications 1 à 5, dans lequel la membrane est rincée par du perméat.

7. Procédé selon les revendications 1 à 6, dans lequel le rétentat est guidé en circuit sur la membrane.

8. Procédé selon les revendications 1 à 7, dans lequel la membrane se trouve sur la paroi intérieure de canaux de forme tubulaire.

9. Procédé selon la revendication 8, dans lequel le diamètre intérieur de la section transversale tubulaire est d'au moins 5 mm.
